# EUROPEAN PATENT APPLICATION

(11) **EP 3 046 262 A1**
(43) Date of publication of application: **20.07.2016**
(21) Application number: 15196915.1
(22) Date of filing: 30.11.2015
(51) Int. Cl.: H04B 1/3888, A45C 11/00, H04M 1/02, H04M 1/18

(54) **PROTECTOR ATTATCHING CASE FOR MOBILE TERMINAL**

(30) Priority: 14.01.2015 KR 20150000284 U
(71) Applicant: Whitestone Co., Ltd., Chungcheongnam-do 331-980 (KR)
(72) Inventor: Seo, Kyung Lim, 463-850 Gyeonggi-do (KR); Min, Hye Sook, Seongnam-si Gyeonggi-do 13600 (KR)
(74) Representative: Beetz & Partner mbB

(57) **Abstract**

The present invention provides a protection attaching case for a mobile terminal. The protector attaching case for a mobile terminal includes: a lower case on which a liquid crystal display protection member for protecting the liquid crystal display of a mobile terminal including a smartphone is mounted; an upper case that is detachably coupled to the lower case and has an attachment hole through which external force is applied to the liquid crystal display protection member when the liquid crystal display protection member is attached to a mobile terminal; an attachment hole cover that is detachably disposed on the upper case and covers the attachment hole; and an edge protection member that has a closed rectangular ring shape for protecting the edges of the liquid crystal display of the mobile terminal.

## Description

### CROSS-REFERENCE TO RELATED APPLICATION

This application claims the benefit of Korean Utility Model Application No. 20-2015-0000284 filed on January 14, 2015 with the Korean Intellectual Property Office, the disclosure of which is incorporated herein by reference.

### BACKGROUND OF THE INVENTION

### 1. Field of the Invention

The present invention relates to a protector attaching case for a mobile terminal, and more particularly, a protector attaching case for a mobile terminal that allows for quickly and accurately attaching/detaching a liquid crystal protection member for protecting liquid crystals in a mobile terminal including a smartphone.

### 2. Description of the Related Art

Smartphones and tablet PCs popularized in recent years have large liquid crystal displays larger and are expensive as compared with common mobile phones, so they are usually equipped with liquid crystal display protection films to prevent scratching.

Liquid crystal display protection films are usually composed of a transparent film made of synthetic resin and having an adhesive portion and a separation film detachably disposed on the synthetic resin film having the adhesive portion and protecting the adhesive portion.

Common mobile phones have a small and square or rectangular liquid crystal panel and have keypads, a speaker, and a camera not on, but around the liquid crystal panel, so it is possible to easily attach liquid crystal panel films after removing separation films.

Smartphones, tablet PCs, and the like recently popularized and widely used have a camera lens, a speaker, a home button, various sensors, and the like in a liquid crystal display screen, so liquid crystal display protection films are on the market with portions, which correspond to those components, cut and bored to be appropriately attached.

When a liquid crystal display protection film is attached on a smartphone or a tablet PC, it should be attached such that a camera lens, a speaker, a home button, and various sensors in a liquid crystal display can be positioned in corresponding cut and bored portions.

However, there is a problem that the liquid crystal displays of smartphones and tablet PCs are larger than those of common mobile phones and cut and bored portions are positioned over and under each other, so it is difficult to attach liquid crystal display protection films to an accurate position at a time.

In particular, liquid crystal display protection films being on the market have one label on a separation film on the back, so users hold a label and removes a separation film by pulling the separation film in one direction with a liquid crystal display protection film on a liquid crystal display, and accordingly, it is difficult to longitudinally fit the film on the liquid crystal display.

If a liquid crystal display protection film is not attached to an accurate position at a time, it is attached at an angle. When a liquid crystal display protection film attached at an angle is detached, dirt sticks to the adhesive portion or the adhesive portion is damaged by fingerprints or hand marks, so transparency decreases. Further, when the adhesive portion is damaged, adhesive ability reduces.

Accordingly, since it is required to accurately attach a protection film at a time on a portable communication terminal, it is very difficult to attach a liquid crystal display protection film, and if a liquid crystal display protection film is not attached at a time, it is damaged and a user have to purchase a new one.

### [Document of Relatd Art]

### [Patent Document]

Korean Patent No. 10-1149573 (Autoconnector Co., Ltd) May 17, 2012

### SUMMARY OF THE INVENTION

An object of the present invention is to provide a protector attaching case for a mobile terminal that allows for easily, quickly, and accurately attaching a liquid crystal display protection member to a mobile terminal including a smartphone, can safely protect and keep a liquid crystal display protection member and relevant products, can prevent inflow of dirt, and additionally has an edge protection member capable of protecting edges of a liquid crystal display.

According to an aspect of the present invention, a protector attaching case for a mobile terminal includes: an upper case having an attachment hole provided as a passage through which external force is applied to a liquid crystal display protection member for protecting a liquid crystal display of a mobile phone including a smartphone when the liquid crystal display protection member is attached to a mobile terminal; and an attachment hole cover detachably attached to the upper case and sealing the attachment hole.

The protector attaching case may further include a lower case on which the liquid crystal display protection member is seated and that is detachably combined with the upper case.

The protector attaching case may further include an edge protection member formed in a closed rectangular ring shape to protect edges of the liquid crystal display of the mobile terminal.

A holding tab may be disposed on the attachment hole cover.

Holding protrusions fitted around the mobile terminal may be formed on the upper case.

A cut-off portion providing a space allowing for conveniently separating the liquid crystal display protection member detachably attached to the upper case may be formed at a side of the holding protrusion.

The attachment hole may be longitudinally elongated at the center portion of the upper case.

A separation film having a separation tab may be detachably attached to the liquid crystal display protection member, and the separation tab may be disposed at the cut-off portion.

Adhesive members for detachably attaching the liquid crystal display protection member to the upper case may be disposed between the upper case and the liquid crystal display protection member.

The adhesive members may space the liquid crystal display protection member from the upper case by having a predetermined thickness.

A back protection member protecting the back of the liquid crystal display protection member may be disposed between the lower case and the liquid crystal display protection member.

The liquid crystal display protection member may include a liquid crystal display protection film or glass.

A step on which the edge protection member is fitted may be formed on the upper case.

The edge protection member may be made of synthetic resin or metal.

Embodiments of the present invention allow for easily, quickly, and accurately attaching a liquid crystal display protection member to a mobile terminal including a smartphone, can safely protect and keep a liquid crystal display protection member and relevant products, can prevent inflow of dirt, and additionally have an edge protection member capable of protecting edges of a liquid crystal display. Therefore, it is possible to more effectively protect a mobile terminal.

### BRIEF DESCRIPTION OF THE DRAWINGS

FIG. 1 is an exploded perspective view illustrating a protector attaching case for a mobile terminal according to an embodiment of the present invention.
FIG. 2 is a perspective view illustrating a lower case illustrated in FIG. 1.
FIG. 3 is a perspective view illustrating an upper case illustrated in FIG. 1.
FIG. 4 is a perspective view illustrating the bottom of the upper case illustrated in FIG. 3.
FIG. 5 is a perspective view illustrating that a liquid crystal display protection member is attached to the upper case illustrated in FIG. 4.
FIG. 6 is a perspective view illustrating a liquid crystal display protection member illustrated in FIG. 1.
FIG. 7 is a perspective view illustrating that an attachment hole cover is partially separated from the upper case illustrated in FIG. 1.
FIG. 8 is a perspective view illustrating an edge protection member illustrated in FIG. 1.
FIG. 9 is a perspective view illustrating that the edge protection member illustrated in FIG. 1 is installed on a mobile terminal where the liquid crystal display protection member is attached.
FIG. 10 is a flowchart schematically illustrating an order of attaching a liquid crystal display protection member and an edge protection member to a mobile terminal in the embodiment.

### DETAILED DESCRIPTION OF THE PREFERRED EMBODIMENTS

There is a need for referring to accompanying drawings illustrating exemplary embodiments of the present invention and the contents in the accompanying drawings in order to clearly understand the present invention, operational advantages of the present invention, and the objects achieved by the embodiments of the present invention.

Hereinafter, the present invention is described in detail with reference to the accompanying drawings by describing exemplary embodiments of the present invention. Like reference numerals given in the drawings indicate like components.

A mobile terminal stated herein may include a smartphone, a PDA, an MP3 player, a DMB phone, a PMP, a digital camera, an electronic organizer, and a game machine and a liquid crystal display protection member may include a liquid crystal display protection film or glass thicker than the liquid crystal display protection film.

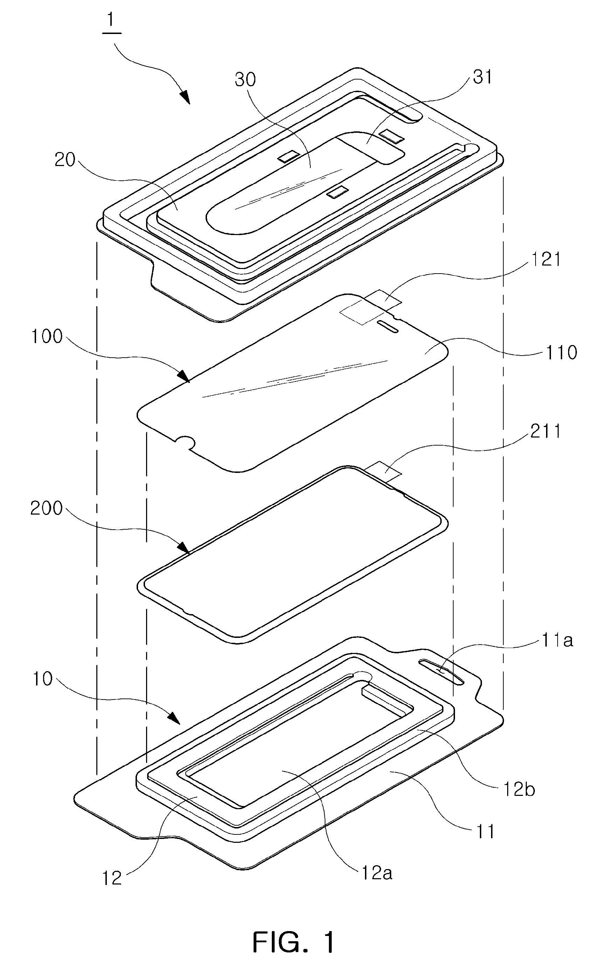

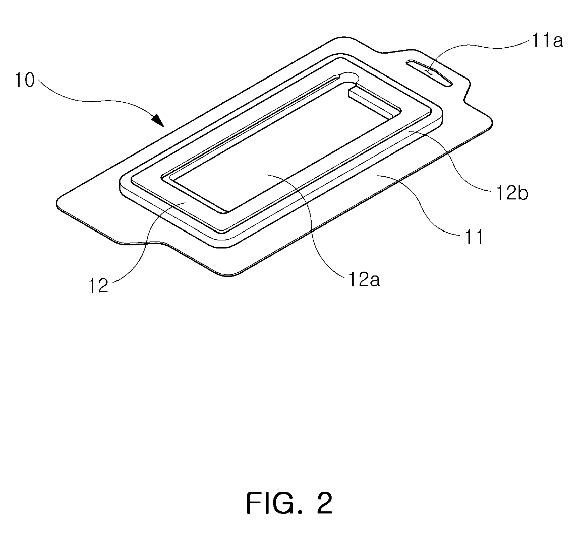

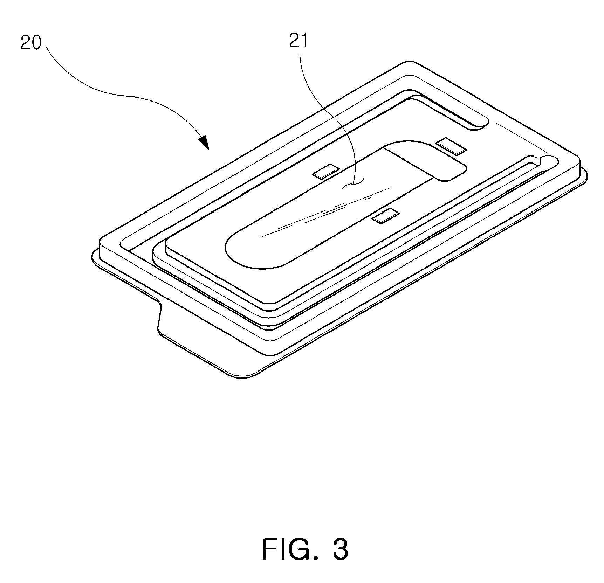

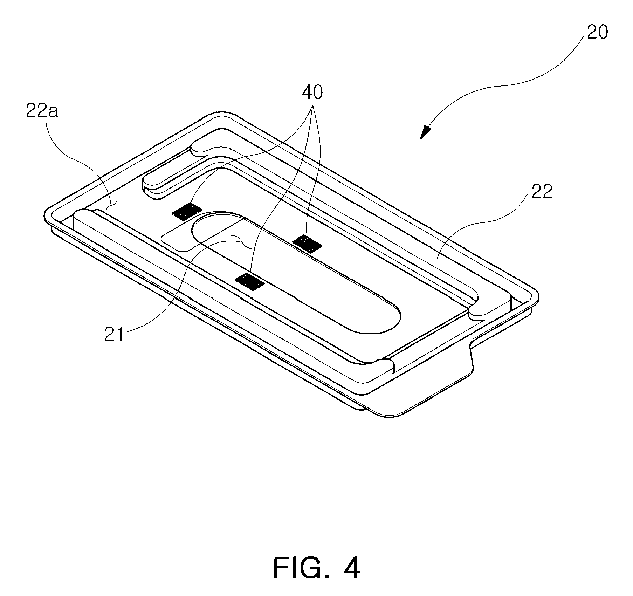

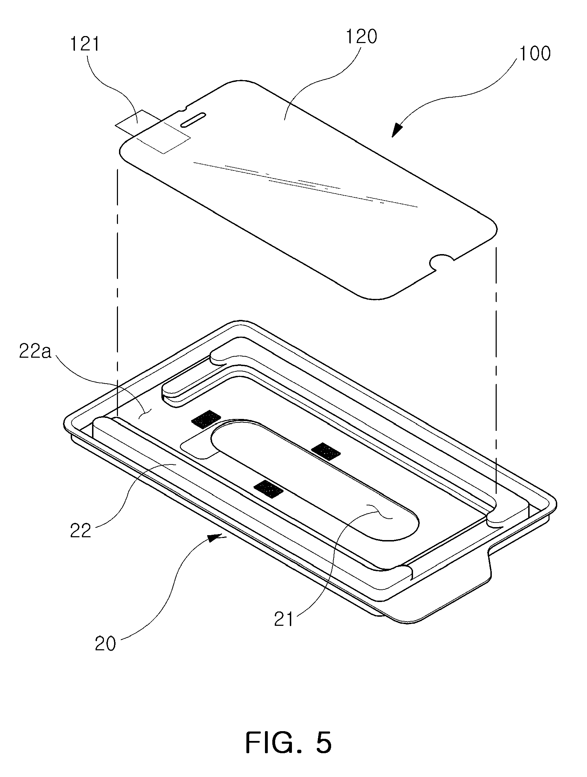

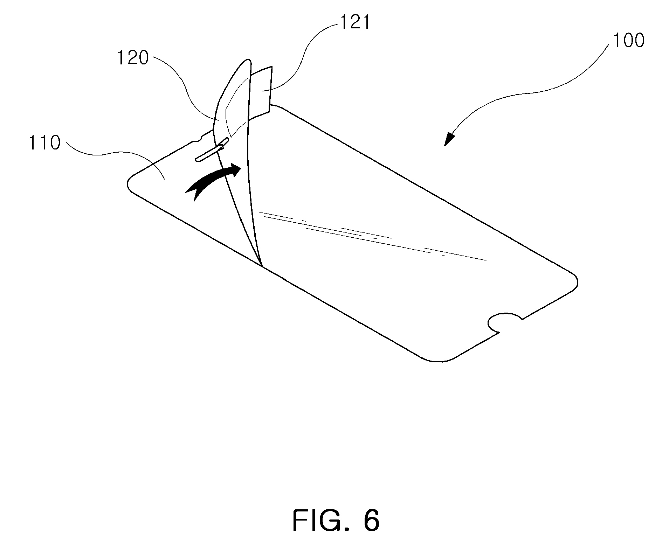

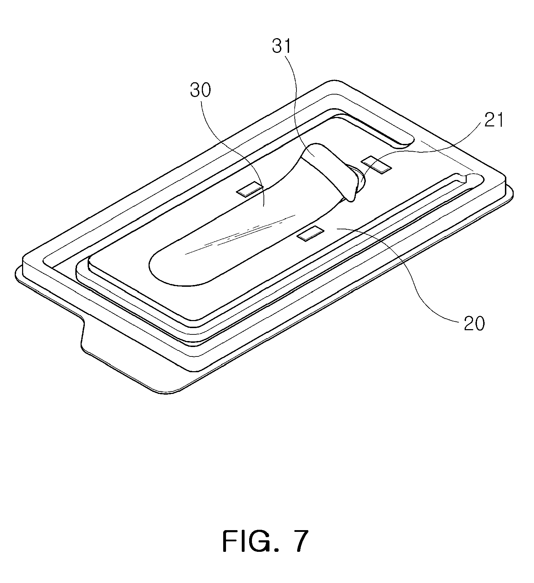

FIG. 1 is an exploded perspective view illustrating a protector attaching case for a mobile terminal according to an embodiment of the present invention, FIG. 2 is a perspective view illustrating a lower case illustrated in FIG. 1, FIG. 3 is a perspective view illustrating an upper case illustrated in FIG. 1, FIG. 4 is a perspective view illustrating the bottom of the upper case illustrated in FIG. 3, FIG. 5 is a perspective view illustrating that a liquid crystal display protection member is attached to the upper case illustrated in FIG. 4, FIG. 6 is a perspective view illustrating a liquid crystal display protection member illustrated in FIG. 1, and FIG. 7 is a perspective view illustrating that an attachment hole cover is partially separated from the upper case illustrated in FIG. 1.

As illustrated in the figures, a protector attaching case 1 for a mobile terminal according to an embodiment of the present invention includes : a lower case 10 on which a liquid crystal display protection member 100 for protecting the liquid crystal display of a mobile terminal including a smartphone is mounted; an upper case 20 that is detachably coupled to the lower case 10 and has an attachment hole 21 through which external force is applied to the liquid crystal display protection member 100 when the liquid crystal display protection member 100 is attached to a mobile terminal; an attachment hole cover 30 that is detachably disposed on the upper case 20 and covers the attachment hole 21; and an edge protection member 200 that is disposed between the upper case 20 and the liquid crystal display protection member 100, has adhesive members 40 for separably attaching the liquid crystal display protection member 100 to the upper case 20, and has a closed rectangular ring shape for protecting the edges of the liquid crystal display of the mobile terminal. Further, the protector attaching case 1 may further include a back protection member (not illustrated) that is disposed between the lower case 10 and the liquid crystal display protection member 100 and protects the back of the liquid crystal display protection member 100.

The lower case 10 defines a sealed space when it is combined with the upper case 20 and the space is used for keep the liquid crystal display protection member 100, a screen cleaner (not illustrated), and the like.

In this embodiment, the lower case 10, as illustrated in FIGS. 1 and 2, includes a base plate 11 having a locking hole 11a at a side, and a protrusion 12 protruding upward on the top of the base plate 11.

The locking hole 11a formed at the base plate 11 of the lower case 10 can be locked on a support protrusion of a holder to hang the lower case 10 combined with the upper case 20 the holder.

The protrusion 12 of the lower case 10, as illustrated in FIGS. 1 and 2, has a seat 12a and a cleaner for the screen of a mobile terminal may be kept in the seat 12a.

The liquid crystal display protection member 100 is disposed on the top of the protrusion 12 and then the upper case 20 is mounted on the lower case 10, thereby sealing the liquid crystal display protection member 100. Accordingly, it is possible to prevent damage due to external shock and inflow of dirt.

Further, a step 12b on which the edge protection member 200 is fitted is formed around the edge of the protrusion 12.

The upper case 20 defines a sealed space when it is detachably combined with the lower case 10 and allows the liquid crystal display protection member 100 to be easily, quickly, and accurately attached to a mobile terminal.

An attachment hole 21 is formed on the upper case in this embodiment, as illustrated in FIG. 3.

In this embodiment, the attachment hole 21 may be provided as a passage through which external force, for example, pressure by a finger is transmitted so that the liquid crystal display protection member 100 attached to the upper case 20 can be separated and attached to a mobile terminal.

That is, in this embodiment, the liquid crystal display protection member 100 is attached to the top inside the upper case 20 by the adhesive member 40, so external force needs to be applied to the liquid crystal display protection member 100 to separate the attached liquid crystal display protection member 100 from the upper case 20.

According to this embodiment, it is possible to separate the attached liquid crystal display protection member 100 from the upper case by applying pressure by a finger, that is, external force through the attachment hole 21 of the upper case 20 and then attach the area, which corresponds to the attachment hole 21, of the liquid crystal display protection member 100 to a mobile terminal.

In this embodiment, cloth may be used to prevent a fingerprint from remaining on the liquid crystal display protection member 100 when the liquid crystal display protection member 100 is pressed through the attachment hole 21.

In this embodiment, the attachment hole 21, as illustrated in FIG. 3, may be longitudinally elongated at the center portion of the upper case 20.

Holding protrusions 22 are formed with a width corresponding to the longitudinal width of a mobile terminal on the top inside the upper case 20, as illustrated in FIG. 4, so they can hold the mobile terminal.

One of the holding protrusions 22, that is, as illustrated in FIG. 5, the holding protrusion 22 closer to a separation tab 21 on the liquid crystal display protection member 100 may have a cut-off portion 22a to conveniently separate a separation film 120 attached to the liquid crystal display protection member 100, as illustrated in FIG. 6.

The attachment hole cover 30, as illustrated in FIGS. 1 to 7, is detachably disposed on the top of the upper case 20 and prevents dirt from flowing into the attachment hole 21 by sealing the attachment hole 21.

In this embodiment, the attachment hole cover 30 may be detachably disposed on the upper case by an adhesive material on the bottom and a holding tab 31 may be disposed at a side for convenient separation, as illustrated in FIG. 1.

The adhesive members 40, as illustrated in FIG. 4, are attached to the top inside the upper case 20 and has adhesive layers on both sides, to they attach the liquid crystal display protection member 100 to the upper case 20.

In this embodiment, the adhesive members 40 can space the liquid crystal display protection member 100 from the upper case 20 by having a predetermined thickness.

The back protection member (not illustrated) is disposed the lower case 10 and the liquid crystal display protection member 100 and protects the bottom of the liquid crystal display protection member 100.

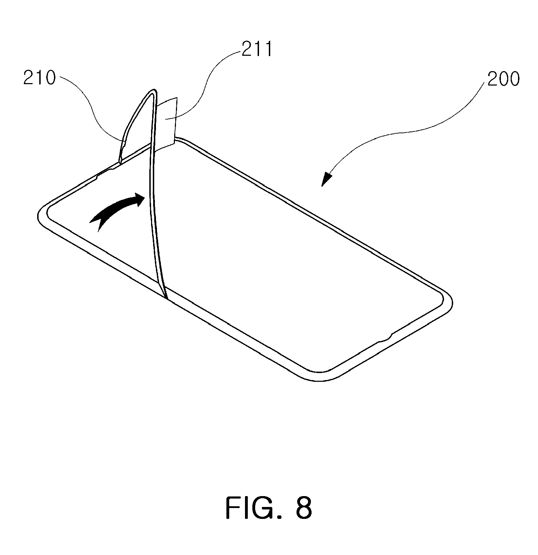

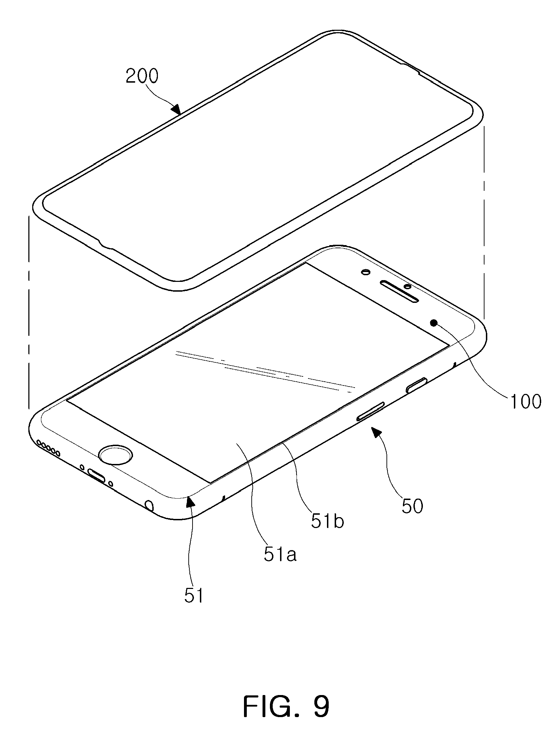

Meanwhile, FIG. 8 is a perspective view illustrating an edge protection member illustrated in FIG. 1 and FIG. 9 is a perspective view illustrating that the edge protection member illustrated in FIG. 1 is installed on a mobile terminal where the liquid crystal display protection member is attached.

The mobile terminal 50 illustrated in FIG. 9 has a liquid crystal display with the edges of a screen 51a rounded and an edge protection member 200 is attached to protect the rounded edges 51b of the mobile terminal.

The edge protection member 200, which is attached around the edges 51b of the liquid crystal display 51 to protect the edges 51b of the liquid crystal display 51, may be formed entirely in a closed rectangular ring shape corresponding to the entire shape of the edges 51b of the liquid crystal display 51.

Meanwhile, the edge protection member 200 may be made of various materials such as synthetic resin and metal and has adhesive layers at the portions that are brought in contact with the edges 51b of the liquid crystal display 51, and a separation film 210 is attached to protect the adhesive layers before the edge protection member 200 is used, as illustrated in FIG. 8, and a separation tab 211 for easily separating the separation film 210 is disposed on the separation film 210.

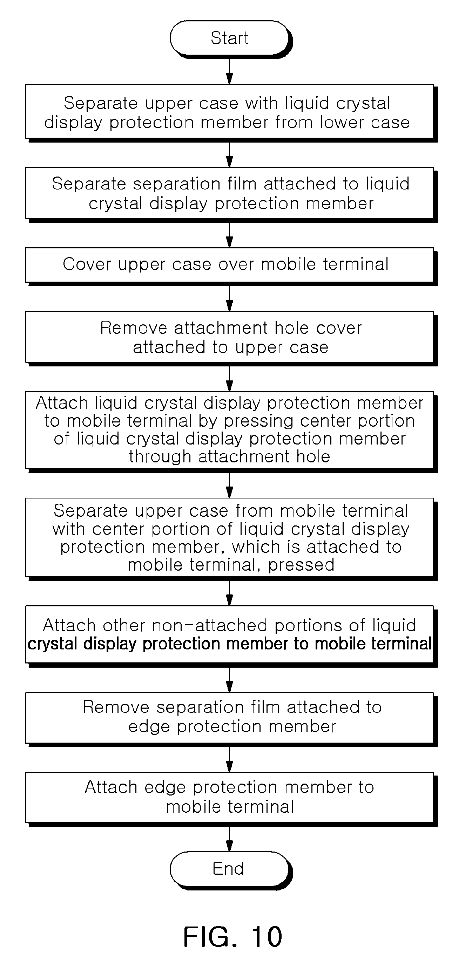

FIG. 10 is a flowchart schematically illustrating an order of attaching a liquid crystal display protection member and an edge protection member to a mobile terminal in the embodiment.

An order of attaching the liquid crystal display protection member 100 to a mobile terminal is briefly described hereafter with reference to FIG. 10.

First, the upper case 20 with the liquid crystal display protection member 100 attached is separated from the lower case 10. The separated upper case 20 is turned over and then the separation film 120 of the liquid crystal display protection member 100 attached to the upper case 20 is removed.

Next, the upper case 20 is placed over a mobile terminal and then the attachment hole cover 30 attached to the upper case 20 is removed. The center portion of the liquid crystal display protection film 110 is attached to the mobile terminal by pressing the center portion of the liquid crystal display protection member 100 through the attachment hole 21.

Next, the upper case 20 is separated from the mobile terminal with the center portion of the liquid crystal display protection film on the mobile terminal pressed.

Next, the liquid crystal display protection film 110 finishes being attached by attaching the other portion of the liquid crystal display protection film 110, which are not attached, to the mobile terminal.

Next, as illustrated in FIG. 8, the separation film 210 attached to the edge protection member 200 is removed and then the edge protection member 200 is attached around the edges 51b of the liquid crystal display 51 of the mobile terminal 50, thereby finishing attaching the edge protection member.

As described above, an embodiment of the present invention allows for easily, quickly, and accurately attaching a liquid crystal display protection member to a mobile terminal including a smartphone, can safely protect and keep a liquid crystal display protection member and relevant products, can prevent inflow of dirt, and additionally has an edge protection member capable of protecting edges of a liquid crystal display. Therefore, it is possible to more effectively protect a mobile terminal.

The present invention is not limited to the embodiments described above and it is apparent to those skilled in the art that the present invention may be changed and modified in various ways without departing from the spirit and scope of the present invention. Therefore, those changes and modifications should be construed as being included in the scope of the present invention described in claims.

## Claims

1. A protector attaching case for a mobile terminal, comprising:
an upper case having an attachment hole provided as a passage through which external force is applied to a liquid crystal display protection member for protecting a liquid crystal display of a mobile phone including a smartphone when the liquid crystal display protection member is attached to a mobile terminal; and
an attachment hole cover detachably attached to the upper case and sealing the attachment hole.

2. The protector attaching case of claim 1, further comprising a lower case on which the liquid crystal display protection member is seated and that is detachably combined with the upper case.

3. The protector attaching case of claim 1, further comprising an edge protection member formed in a closed rectangular ring shape to protect edges of the liquid crystal display of the mobile terminal.

4. The protector attaching case of claim 1, wherein a holding tab is disposed on the attachment hole cover.

5. The protector attaching case of claim 1, wherein holding protrusions fitted around the mobile terminal are formed on the upper case.

6. The protector attaching case of claim 5, wherein a cut-off portion providing a space allowing for conveniently separating the liquid crystal display protection member detachably attached to the upper case is formed at a side of the holding protrusion.

7. The protector attaching case of claim 1, wherein the attachment hole is longitudinally elongated at the center portion of the upper case.

8. The protector attaching case of claim 6, wherein a separation film having a separation tab is detachably attached to the liquid crystal display protection member, and
the separation tab is disposed at the cut-off portion.

9. The protector attaching case of claim 1, wherein adhesive members for detachably attaching the liquid crystal display protection member to the upper case are disposed between the upper case and the liquid crystal display protection member.

10. The protector attaching case of claim 9, wherein the adhesive members space the liquid crystal display protection member from the upper case by having a predetermined thickness.

11. The protector attaching case of claim 1, wherein a back protection member protecting the back of the liquid crystal display protection member is disposed between the lower case and the liquid crystal display protection member.

12. The protector attaching case of claim 1, wherein the liquid crystal display protection member includes a liquid crystal display protection film or glass.

13. The protector attaching case of claim 1, wherein a step on which the edge protection member is fitted is formed on the upper case.

14. The protector attaching case of claim 1, wherein the edge protection member is made of synthetic resin or metal.
